(19) Europäisches Patentamt

European Patent Office

Office européen des brevets

(11) **EP 1 371 713 A1**

(12) **EUROPEAN PATENT APPLICATION**
published in accordance with Art. 158(3) EPC

(43) Date of publication:
**17.12.2003 Bulletin 2003/51**

(51) Int Cl.⁷: **C10J 3/00**, B09B 3/00

(21) Application number: **02715799.9**

(22) Date of filing: **18.01.2002**

(86) International application number:
**PCT/JP02/00307**

(87) International publication number:
**WO 02/057395 (25.07.2002 Gazette 2002/30)**

(84) Designated Contracting States:
**AT BE CH CY DE DK ES FI FR GB GR IE IT LI LU MC NL PT SE TR**

(30) Priority: **18.01.2001 JP 2001010831**

(71) Applicants:
• **JAPAN SCIENCE AND TECHNOLOGY CORPORATION**
**Kawaguchi-shi, Saitama 332-0012 (JP)**
• **Ecomeet Solutions Co., Ltd.**
**Tokyo 102-0074 (JP)**

(72) Inventors:
• **YOSHIKAWA, Kunio**
**Sagamihara-shi, Kanagawa 228-0814 (JP)**
• **SUZUKI, Narumi c/o DAITO CO. LTD.**
**Seto-shi, Aichi 489-0071 (JP)**

(74) Representative: **Zimmermann, Gerd Heinrich**
**Zimmermann & Partner,**
**Postfach 33 09 20**
**80069 München (DE)**

(54) **APPARATUS FOR GASIFYING SOLID FUEL**

(57) The present invention provides a relatively small scale apparatus for gasifying solid fuel in which pyrolysis gas produced in a pyrolyzer by thermal-decomposition reaction of the solid fuel can be reformed to crude fuel gas. The apparatus comprises a solid fuel pyrolyzer 1 and a steam reformer 5, and thermally decomposes the solid fuel with a combustion reaction of a low oxygen density to produce the pyrolysis gas, and reforms the pyrolysis gas to produce the crude fuel gas. The pyrolyzer has an air inlet 18 positioned at a bottom part thereof and upwardly blowing combustion air into the pyrolyzer; a bed of pyrolyzer 30 located above the air inlet; and a pyrolysis gas exit positioned at an upper part of a body of the pyrolyzer and conducting the pyrolysis gas out of the pyrolyzer. The bed is made by a layered stack of many spherical heat-resistant materials 32 which form a number of narrow gaps for draft of the combustion air over the whole bed. The steam reformer has a reforming area 51 which produces the crude fuel gas by a steam reforming reaction of the pyrolysis gas, a pyrolysis gas inlet 55 which is in communication with the pyrolysis gas exit and which introduces the pyrolysis gas into the reforming area, a mixed gas inlet 54 introducing mixed gas of steam and air into the reforming area, a reformed gas effluent passage 70 for conducting reformed gas of the reforming area out of the reformer, and a permeable heat-barrier 60 positioned between the reforming area and the reformed gas effluent passage. The barrier is made by a layered stack of many spherical heat-resistant materials 62 which form a number of narrow gaps for draft of the pyrolysis gas and the mixed gas.

**FIG.2**

EP 1 371 713 A1

**Description**

Technical Field

The present invention relates to an apparatus for gasifiying solid fuel, and more specifically, to such an apparatus producing pyrolysis gas by a thermal-decomposition reaction and reforming the pyrolysis gas to crude fuel gas.

Technical Background

An apparatus for gasifiying solid fuel is known in the art, which has a pyrolyzer or thermal-decomposition furnace charged with solid fuel, such as waste, e. g., waste plastic, sludge, shredder dust, or municipal refuse, or coal or the like. The solid fuel is thermally decomposed to produce pyrolysis gas in reducing atmosphere of a non or less oxygen condition at a high temperature. A variety of combustion furnaces or incinerators may be generally used as the pyrolyzer, such as a waste gasification melting furnace, a coal gasifier, a rotary kiln type of pyrolyzer (an external heating type of pyrolyzer), a batch type of pyrolyzer (a self-burning type of pyrolyzer) and so forth.

These kinds of solid fuel gasification apparatuses have been developed as being relatively large scale equipment which are continuously operated. Therefore, those apparatuses have constructions which are difficult to be applied to solid fuel gasification equipment of middle scale or small scale facilities, from a viewpoint of the volume of solid fuel, maintenance fees of equipment and so forth.

The present inventor et al. have recently developed a waste gasification melting system which comprises a high-temperature air generator for continuously supplying an amount of hot air at a high temperature exceeding 800°C, and a waste gasification melting furnace (pebble furnace) containing a number of spherical ceramics (pebbles).

The high temperature air is introduced from a top of the waste gasification melting furnace to the inner area of the furnace downwardly, so that the waste on the spherical ceramics (pebbles) is melted and slagged. The molten slag flows downwardly through the gaps of the pebbles to be discharged out of the furnace from the furnace bed part. The pyrolysis gas produced by the thermal-decomposition of waste is conducted out of the furnace and introduced into a cleaning-up means or purification means. This type of waste gasification melting system can be designed to be relatively small scale equipment and therefore, it has a construction applicable to waste gasification equipment for middle or small scale facilities.

However, the waste of a middle or small scale facility usually includes a wide variety of wastes, such as synthetic resin, kitchen refuse, biological waste, fibrous material, inorganic material and so forth. In a case where waste includes a relatively large amount of waste plastics to be incinerated in a waste gasification furnace as generally in use, the molten plastic material clings to its furnace bed part. It is apprehensive of condition that the combustion air is prevented from flowing through the furnace bed part into the furnace. In addition, unburned residue is apt to clingingly deposit on the furnace bed part, which residue is difficult to be removed therefrom. On the other hand, in a case where such waste is incinerated by the aforementioned pebble furnace, the molten plastic materials and so forth tend to block the gaps among the pebbles. Such blockage of the gaps among the pebbles gives an undesirable result in that fluid passages of high temperature air and molten slag are narrowed or restricted.

Further, in the conventional solid fuel gasification apparatuses, a large amount of sensible heat of pyrolysis gas produced in the gasification furnace is lost in the steps of cleaning-up and purifying the gas in cleaning-up and purifying equipment or a gas scrubbing equipment, and therefore, the thermal efficiency of the whole system is lowered. In order to overcome such a drawback of heat loss and to produce high-quality fuel gas, application of steam reforming process has been studied in which hydrocarbon in the pyrolysis gas is reformed by steam reforming action of high temperature steam above 700°C. However, constructions of reformer or reforming device for mixing the high temperature steam and the pyrolysis gas to reform the pyrolysis gas have not yet concretely studied.

It is an object of the present invention to provide a relatively small scale apparatus for gasifying solid fuel in which pyrolysis gas produced in a pyrolyzer by a thermal-decomposition reaction of the solid fuel is successfully reformed to crude fuel gas.

It is another object of the present invention to provide a pyrolyzer for solid fuel constituting such an apparatus for gasifying solid fuel, which can incinerate mixed waste including a relatively large amount of waste plastics and the like, and which can produce the pyrolysis gas therefrom.

It is still another object of the present invention to provide a steam reformer constituting the aforesaid apparatus for gasifying solid fuel, which successfully reforms the pyrolysis gas to the crude fuel gas by mixing the pyrolysis gas of the pyrolyzer with steam.

Disclosure of the Invention

The present invention provides an apparatus for gasifying solid fuel which thermally decomposes the solid fuel by a combustion reaction of a low oxygen density so as to produce pyrolysis gas, comprising a solid fuel pyrolyzer and a steam reformer;

wherein said pyrolyzer has an air inlet positioned at a bottom part thereof to blow combustion air into the pyrolyzer, a bed of the pyrolyzer located above the air inlet, and a pyrolysis gas exit positioned at an upper part of a body of the pyrolyzer and conducting the pyrolysis gas out of the pyrolyzer, the bed being constituted by a layered stack of many spherical heat-resistant materials which form a number of narrow gaps for draft of the combustion air over the whole bed; and

wherein said steam reformer has a reforming area for producing crude fuel gas by a steam reforming reaction of said pyrolysis gas, a pyrolysis gas inlet which is in communication with said pyrolysis gas exit and which introduces the pyrolysis gas into the reforming area, a mixed gas inlet for introducing mixed gas of steam and air into the reforming area, a reformed gas effluent passage for conducting reformed gas of the reforming area out of the reformer, and a permeable heat-barrier positioned between the reforming area and the reformed gas effluent passage, the barrier being constituted by a layered stack of many spherical heat-resistant materials which form a number of narrow gaps for draft of said pyrolysis gas and said mixed gas.

Further, the present invention provides a pyrolyzer of an apparatus for gasifying solid fuel which thermally decomposes the solid fuel by a combustion reaction of a low oxygen density so as to produce pyrolysis gas, comprising:

an air inlet positioned at a bottom part of the pyrolyzer and upwardly blowing combustion air into the pyrolyzer; a bed of the pyrolyzer located above the air inlet; and a pyrolysis gas exit positioned at an upper part of a body of the pyrolyzer and conducting the pyrolysis gas out of the pyrolyzer, the bed being constituted by a layered stack of many spherical heat-resistant materials, which form a number of narrow gaps for draft of the combustion air over the whole bed.

Furthermore, the present invention provides a steam reformer of an apparatus for gasifying solid fuel which reforms pyrolysis gas produced by a thermal-decomposition reaction of the solid fuel, comprising:

a reforming area which produces crude fuel gas by a steam reforming reaction of said pyrolysis gas; a pyrolysis gas inlet which introduces the pyrolysis gas of the solid fuel pyrolyzer into the reforming area; a mixed gas inlet for introducing mixed gas of steam and air into the reforming area; a reformed gas effluent passage for conducting reformed gas of the reforming area out of the reformer; and a permeable heat-barrier positioned between the reforming area and the reformed gas effluent passage, the barrier being constituted by a layered stack of many spherical heat-resistant materials, which form a number of narrow gaps for draft of said pyrolysis gas and said mixed gas.

According to the present invention, the pyrolyzer blows combustion air thereinto from the bottom part so that the combustion air is introduced into the pyrolyzer through the gaps of the layered stack of spherical heat-resistant materials: The narrow gaps of the stack disperse the combustion air uniformly over the whole bed of the pyrolyzer, and the bed blows the combustion air into the pyrolyzer substantially equally from the bottom. Therefore, the dispersibility of air in the pyrolyzer is improved. The solid fuel, such as waste lying on the bed, is subjected to complete combustion in its lowermost zone, owing to a combustion reaction of a high air ratio, and gasification in its intermediate zone, and further, carbonization in its uppermost zone, owing to reduction combustion of a low air ratio. The pyrolysis gas generated from the upper surface of the solid fuel is introduced into the reforming area of the reformer. As the combustion reaction in the pyrolyzer proceeds, the solid fuel reduces its volume and combustion residue deposits on the bed. However, the lowermost zone of the solid fuel is supplied with combustion air from the gaps of the spherical heat-resistant materials uniformly over the whole bed, and maintains the high temperature atmosphere owing to the heat accumulation effect of the spherical heat-resistant materials at a high temperature. Therefore, the combustion reaction is promoted and the molten components of the solid fuel, such as the plastic material included in the waste, take a re-combustion reaction within the gaps of the spherical heat-resistant materials. Thus, incinerated ash, which can be relatively easily discharged, deposits on the bed as the result of complete combustion, when the combustion operation of the pyrolyzer is stopped.

The mixed gas of air and steam is introduced into the reforming area of the reformer. The heat-barrier permeably separates the reforming area and the reformed gas effluent passage. The barrier is constituted in a form of layered stack by a number of spherical heat-resistant materials, the layered stack being provided with a number of narrow gaps for draft of the reformed gas. The barrier functions as a heat-insulating partition for preventing the heat of reforming area from being released to the reformed gas effluent passage and thermally insulating the reforming area, and also acts to efficiently disperse the pyrolysis gas and the mixed gas, so as to effectively mix them with each other, thereby achieving reduction in mixing time of the pyrolysis gas and the mixed gas. As the result, the steam reforming reaction is accelerated, and its reaction time is reduced. Also, the barrier acts to trap soot, condensate of tar components and so forth, which are included in the pyrolysis gas, thereby functioning as cleanup means for cleaning-up the reformed gas.

Brief Description of the Drawings

FIG.1 is a system flow diagram of a waste gasification apparatus according to a preferred embodiment of the present invention;

FIG 2 is a vertical cross-sectional view showing constructions of a pyrolyzer and a reformer as shown in Fig. 1;

FIG 3 is a vertical cross-sectional view partially illustrating an arrangement of a bed of the pyrolyzer; and

FIG 4 is a vertical cross-sectional view partially illustrating a structure of a permeable barrier in the reformer.

Best Mode for Carrying out the Invention

Spherical ceramics, such as alumina ceramic balls, are preferably used as the aforementioned spherical heat-resistant materials. The diameter (outer diameter) of the spherical heat-resistant material is set to be in a range of 5mm~10mm, preferably in a range of 20mm~100mm. The cross-section of the spherical heat-resistant material is not limited to a round, but may be designed to be an ellipse or a profile of an oblate sphere. In a case where the high temperature air can be set to have a temperature below 500°C, a metal sphere made of stainless steel can be used as the spherical heat-resistant material.

According to a preferred embodiment of the present invention, the mixed gas of air and steam has a temperature equal to or higher than 300°C, preferably, equal to or higher than 400°C. Preferably, normal temperature steam or process steam produced in a steam boiler and normal temperature air of the ambient atmosphere are heated by a heating device or heater to the high temperature, and they are mixed with each other in a predetermined mixture ratio (weight ratio). Mixed gas of air and steam at a relatively low temperature may be heated by the heating device. The sensible heat of the crude fuel gas after reforming process or the heat of combustion obtained from the combustion reaction of the purified fuel gas may be utilized as a heat source of the heating device for heating the air, steam or mixed gas.

According to another preferred embodiment of the present invention, the solid fuel gasification apparatus is provided with a mixing control device for controlling the mixture ratio of air and steam. The air and steam are mixed with each other under control of the mixing control device so that the mixed gas including an appropriate weight ratio of steam is fed to the reforming area. In the reforming area, the steam and air react with hydrocarbon in the pyrolysis gas, the pyrolysis gas is reformed to be a reformed gas including a relatively large quantity of hydrogen and carbon monoxide, and the reformed gas is conducted out of the reformer through the reformed gas effluent passage as being a crude or unpurified fuel gas. The crude fuel gas is introduced into a heat exchanger for heating air of an ambient condition at normal temperature and/or steam at a relatively low temperature, and the normal temperature air and/or steam are heated by the sensible heat of the crude fuel gas. The thermal efficiency of the whole system is improved by such utilization of the sensible heat of crude fuel gas.

The temperature of air fed to the pyrolyzer is set to be preferably equal to or higher than 150°C, if desired, equal to or higher than 300°C. The temperature of high temperature air is variably set to suitably meet the operating conditions of the pyrolyzer and the sort of solid fuel, and if desired, the temperature thereof may be set to be 400°C~1000°C, or otherwise, a temperature above 1000°C. Similarly, the temperature of mixed gas fed to the reformer is variably set to appropriately meet the properties of pyrolysis gas, the temperature of reforming area, the components of crude fuel gas and so forth, and if desired, the temperature of mixed gas may be set to be 700~1000°C, or otherwise, a temperature above 1000°C. The air in the mixed gas takes an exothermic reaction with hydrocarbon in the pyrolysis gas so as to supplement the heat required for an endothermic reaction between the steam in the mixed gas and the hydrocarbon in the pyrolysis gas. However, exceeded inclusion of air in the mixed gas results in an relatively excessive loss of fuel components (carbon monoxide and hydrogen) by reaction thereof with the air, and therefore, it is desirable to limit the amount of air in the mixed gas to the minimum necessary for supplementing the heat of steam reforming reaction. For example, the mixture ratio of air and steam (weight ratio) is limited in a range of 2:8~7:3.

According to the other preferred embodiment of the present invention, the solid fuel gasification apparatus includes a dedusting device, desulfurization device, dechlorination device, denitration device and so forth, as purification means for purifying the crude fuel gas. For instance, the purified fuel gas or syngas is fed to a combustion device of combustion equipment or thermic engine as being a fuel therefor, and the heat energy of the combustion device causes a power generator to be driven so as to supply electrical energy to instruments or equipment out of the system. For example, a combined power generation system or a relatively small scale cogeneration system, in which waste is used as a fuel, can be provided by combining the gasifying apparatus of the present invention with a power generating system, such as a gas-turbine power generator system.

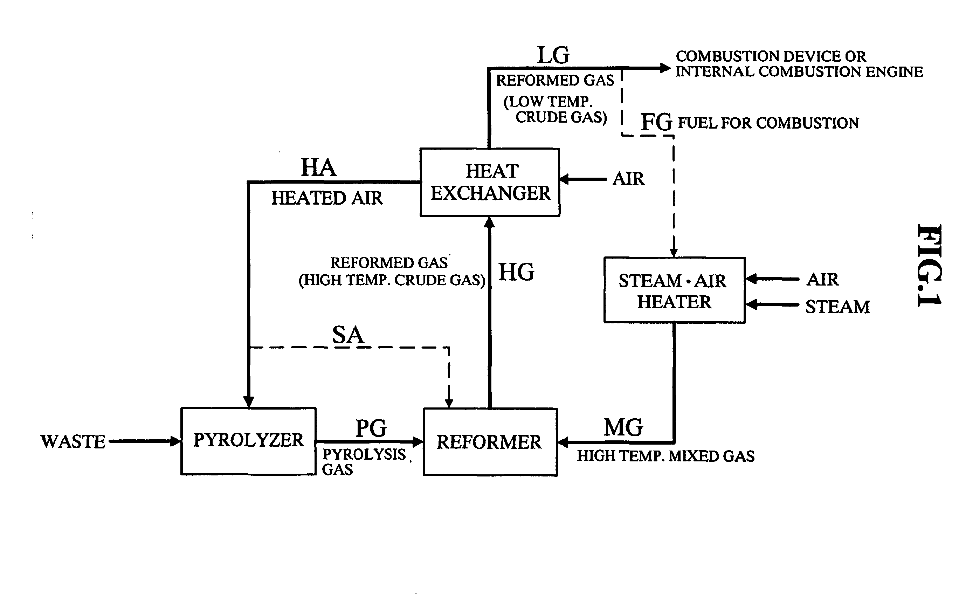

FIG.1 is a system flow diagram of a waste gasification apparatus which is a preferred embodiment of the present invention. As the solid fuel, a variety of thermally decomposable fuels can be exemplified, such as waste, coal, and biomass fuel. The embodiment as described hereinafter relates to a waste gasification apparatus in which a quantity of mixed waste including waste plastics material and the like is used as the solid fuel.

The waste gasification system comprises a pyrolyzer for thermally decomposing the waste and a reformer for reforming pyrolysis gas of the pyrolyzer to crude fuel gas or unpurified gas. The pyrolyzer is connected to a heat exchanger through an air supply passage HA and connected to the reformer through a pyrolysis gas delivery passage PG. The reformer is connected to a heat exchanger and a steam/air heating device by means of a reformed gas effluent passage HG and a mixed gas supply passage MG, respectively. An amount of waste is charged into the pyrolyzer, and a quantity of high-temperature air heated by the heat exchanger is fed to the pyrolyzer through the air supply passage HA. A part of the heated air through the passage HA is, if desired, introduced into the reformer through a branch passage SA. The waste is thermally decomposed in the pyrolyzer into pyrolysis gas and residue in the existence of combustion air. The pyrolysis gas produced in the pyrolyzer is introduced into the reformer through the pyrolysis gas delivery passage PG.

The mixed gas of air and steam heated up to a relatively high temperature by the steam/air heating device is fed from its heat exchanger to the reformer through the mixed gas supply passage MG, and the gas is mixed with the pyrolysis gas in the reformer. Hydrocarbon contained in the pyrolysis gas reacts with the steam and air. The reaction between hydrocarbon and steam is, in general, an endothermic reaction as indicated by the following chemical formula (1), whereas the reaction between hydrocarbon and air is, in general, an exothermic reaction as indicated by the following chemical formula (2):

$$C_xH_y+H_2O \rightarrow CO+H_2+H_2O \qquad (1)$$

$$C_xH_y+O_2+N_2 \rightarrow CO+CO_2+H_2+H_2O+N_2 \qquad (2)$$

The steam reacts with the pyrolysis gas produced by the thermal-decomposition of waste, so that the pyrolysis gas is reformed to a reformed gas (crude or unpurified fuel gas), which contains a relatively large quantity of carbon monoxide and hydrogen. The heat generated by the exothermic reaction between hydrocarbon and air is consumed as the heat required for the endothermic reforming reaction between hydrocarbon and steam.

The pyrolysis gas reacts with the mixed gas, and the steam reforming reaction proceeds so that the pyrolysis gas is reformed to the crude fuel gas containing a relatively large quantity of carbon monoxide and hydrogen. The reformed gas is fed to the heat exchanger to be cooled down by heat exchange with air at a normal temperature, and then, the gas is supplied to a combustion device or internal combustion engine, such as boiler, gas turbine or the like. If desired, gas cleanup devices (not shown), such as a ceramic filter, gas scrubber, desulfurizer, dechlorination device, denitrizer or the like are installed in the fuel gas supply passage LG. The purified reformed gas is supplied to the combustion device or internal combustion engine as a relatively high-quality fuel gas or syngas, and partially supplied to the steam/air heating device. The steam/air heating device heats the steam and air by the heat of combustion of the fuel gas. On the other hand, the combustion device or internal combustion engine produces heating medium such as steam, or generates electric power by means of the heat of combustion of the fuel gas. The heating medium or electric power is supplied to facilities out of the system, as well as partially used as steam or electric power to be supplied to the respective devices within the system.

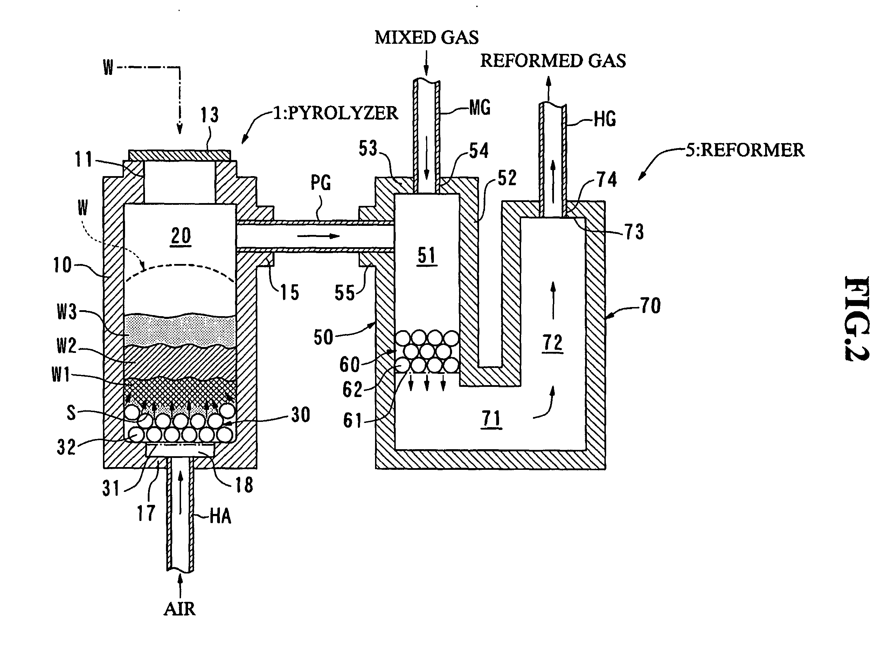

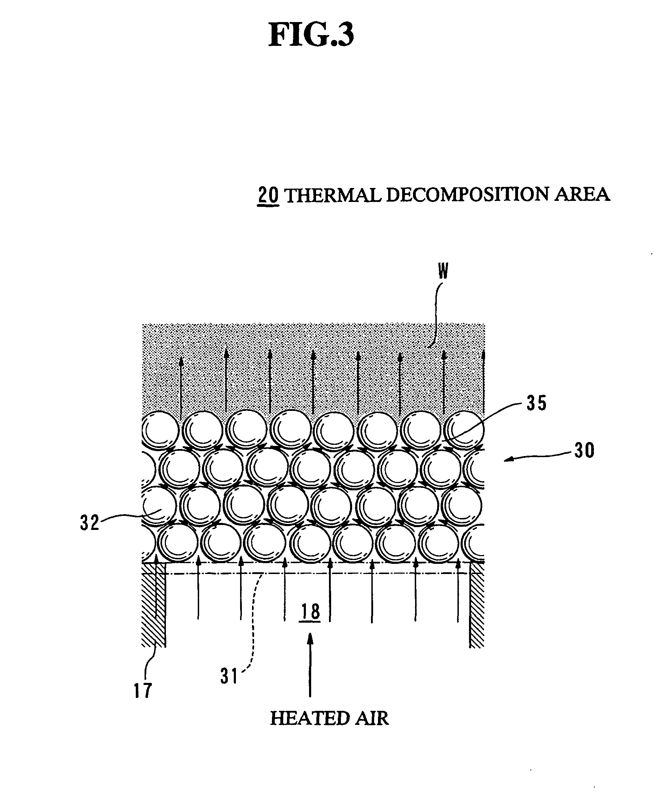

With reference to FIGS. 2 and 3, an embodiment of the waste gasification apparatus according to the present invention is described in detail hereinafter.

FIG 2 is a cross-sectional view which shows the construction of a pyrolyzer 1 and the construction of a reformer 5.

The pyrolyzer 1 comprises a body of pyrolyzer 10 defining a thermal-decomposition area 20. The body 10 is provided with a waste charging port 11 at its top portion and an air inlet 18 at its bottom portion. A top closure 13 for shutting the waste charging port 11 closes the port 11, whereby the substantially closed thermal-decomposition area 20 is formed in the body 10. Spherical ceramics 32 is packed in a bottom section of the body 10, so that a bed of the pyrolyzer 30 for draft of combustion air therethrough is provided at the bottom of the pyrolyzer. The diameter of the spherical ceramics 32 is, preferably, predetermined to be in a range of 5mm~200mm, more preferably, in a range of 20~100mm. For example, the diameter of the spherical ceramics 32 is set to be 50mm. A support structure 31 (shown by a phantom line) for supporting the spherical ceramics 32 thereon, such as a mesh or bars, stretches over or bridges the air inlet 18. The spherical ceramics 32 on the support structure 31 and a bottom wall 17 constitute the bed 30 extending throughout the overall area of the bottom of pyrolyzer.

The air inlet 18 is connected with the air supply passage HA, on which a forced draft blower (not shown) is installed. Combustion air introduced into the air inlet 18 under pressure of the blower upwardly blows into the thermal-decomposition area 20 through gaps among the spherical ceramics 32 constituting the bed 30.

A pyrolysis gas delivery port 15 is formed at an upper portion of the body 10, and an upstream end of the pyrolysis gas delivery passage PG is connected to the delivery port 15. A downstream end of the passage PG is connected to a pyrolysis gas inlet 55 of the reformer 5. The reformer 5 comprises a reforming vessel part 50 constituting a vertical reactor vessel, and a reformed gas flowing part 70 which conducts the reformed gas to the reformed gas effluent passage HG. A mixed gas inlet 54 is provided on a top wall 53 or an upper portion of a wall 52 of the reforming vessel part 50, and a downstream end of the mixed gas supply passage MG is connected to the inlet 54. The wall 52 forms an inner wall surface of the reforming area 51. A support structure 61 (shown by a phantom line), such as a mesh or bars, is provided on the walls 52 to bridge the walls 52 or spread between the walls 52. A permeable heat-barrier 60 constituted by a layered stack of the spherical ceramics 62 is formed on the support structure 61.

A horizontal flow passage 71 of the reformed gas flowing part 70 extends beneath the stack 60. The passage 71 continues to a vertical flow passage 72. A downstream side of the barrier 60, which is the underside thereof in this embodiment, is in communication with the passages 70, 71. The passages 70, 71 effect an inertial dust collecting action or a gravitational dust collecting action. The passages 70, 71 also act to decompose precursors of dioxin or dioxins in an atmosphere of a low oxygen density at a high temperature, preferably above 640 °C, more preferably, above 740°C . Further, the passages 70, 71 functions as a gas cleanup space for cleaning-up the reformed gas by residence thereof at such a high temperature.

A top wall 73 of the passage 72 is formed with a reformed gas outlet 74, and an upstream end of the reformed gas effluent passage HG is connected to the outlet 74. An induced draft blower (not shown) is provided on the fuel gas supply passage LG, and the reformed gas is introduced into the heat exchanger (FIG.1) from the vertical passage 72 through the reformed gas effluent passage HG under the pressure of the blower.

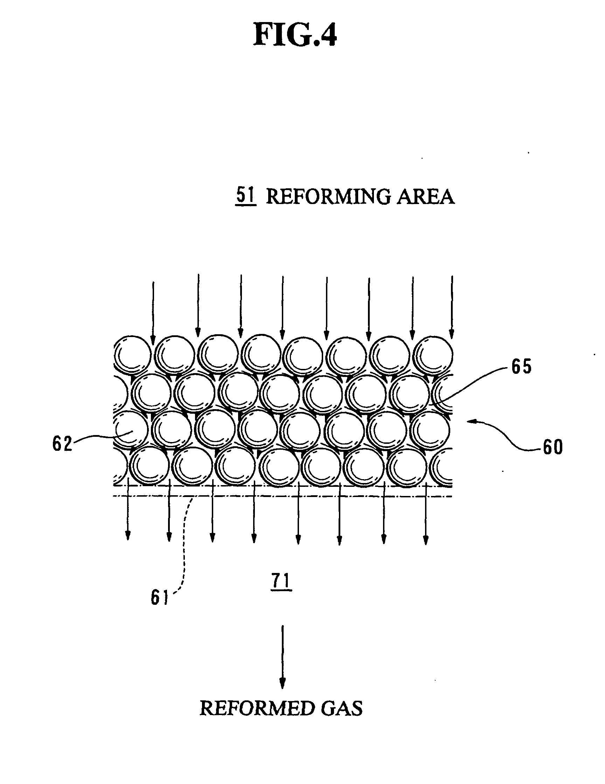

FIGS. 3 and 4 are vertical cross-sectional views showing constructions of the bed 30 and the heat-barrier 60.

As shown in FIG 3, a number of the spherical ceramics 32 are placed on the bottom wall 17 and the support structure 31 in a multiple layered formation, and the bed 30 is formed by the spherical ceramics 32. The waste W charged into the thermal-decomposition area 20 through the waste charging port 11 is supported on the bed 30. A number of gaps or openings 35 are formed among the spherical ceramics 32. However, the stack of spherical ceramics in a multiple layered formation prevents the waste W from gravitationally falling therethrough. Also, the gaps 35 form narrow fluid passages which are disposed in a uniformly distributed condition over the whole area of the bed 30 and which irregularly continue to each other. Therefore, the bed 30 constitutes air dispersing means which blows the combustion air introduced into the air inlet 18, substantially uniformly and upwardly from the whole area of the bed.

The dynamic pressure of the combustion air introduced into the air inlet 18 is partially converted into the static pressure by the airway resistance of the bed 30. The combustion air passes through the gaps 35 distributed over the whole bed 30, and evenly flows from the upper surface of the bed 30 into the thermal-decomposition area 20 in a relatively slow velocity. The spherical ceramics 32 is in a heat transfer contact with the combustion air at a high temperature passing through the gaps 35, and absorb the heat thereof to accumulate the sensible heat of the combustion air. The spherical ceramics 32 also receive the heat of combustion of the waste and accumulate the heat thereof.

As illustrated in FIG 4, a number of the spherical ceramics 62, which are placed on the support structure 61 in a multiple layered formation, have substantially the same construction as the bed 30 has. The stack of spherical ceramics in a multiple layered formation constitutes the permeable heat-barrier 60 which partitions the reforming area 51. The gaps 65 of the barrier 60 provide narrow passages which are disposed in a uniform distribution over the whole area of the barrier 60 and which irregularly continue to each other. Therefore, the pyrolysis gas and the hot mixed gas flowing into the reforming area 51 disperse to the respective narrow fluid passages of the barrier 60 and effectively mix with each other in the respective narrow fluid passages. Thus, the steam reforming reaction of hydrocarbon in the pyrolysis gas and the steam proceeds effectively while the hot gases pass through the gaps 65 of the barrier 60, and the reaction time of the steam reforming reaction is reduced. Simultaneously, the barrier 60 acts to trap soot, condensate of tar components and so forth in the pyrolysis gas, and functions as gas cleanup means for cleaning-up the pyrolysis gas.

The hydrocarbon in the pyrolysis gas reacts with the steam and air in the high temperature atmosphere, owing to mixing of the pyrolysis gas and the high temperature mixed gas in the reforming area 51 and the gaps 65, so that the steam reforming reaction of the hydrocarbon in the pyrolysis gas proceeds. The spherical ceramics 62 accumulates the heat of the high temperature gases in their heat transfer contact therewith, and the gaps 65 are kept in a high temperature condition. The heat-barrier 60 prevents the heat of reforming area 51 from radiating to the horizontal flow passage 71, and thermally insulates the reforming area 51 so as to keep the reforming area 51 in the high temperature condition.

The operation of the waste gasification apparatus with the aforementioned arrangement is described hereinafter.

The waste, which has been, if desired, prepared to be appropriate dimensions or grain sizes, is thrown into the pyrolyzer 1 through the waste charging port 11, so that the waste W lies on the bed 30. The port 11 is shut by the top cover 13, and a burner for initial combustion (not shown) is operated, which is provided on the bed portion or wall portion of the pyrolyzer. At the same time, the combustion air is fed to the air inlet 18 through the air supply passage HA. The combustion air passes through the gaps 35 among the spherical ceramics of the bed 30 and flows into the thermal-decomposition area 20, so that initial combustion of the waste starts.

Since the combustion air is introduced from the bed 30 into the pyrolyzer, the substantially closed area above the waste W is kept in a combustion atmosphere of a low oxygen density (low air ratio). An oxidation combustion reaction in a condition of a relatively high oxygen density (high air ratio) proceeds at a lowermost portion of the waste W, whereas a reduction combustion reaction in a condition of a relatively low oxygen density proceeds at an uppermost portion of the waste W. The formations of the waste W can be classified as illustrated in FIG 2, in accordance with the process of the combustion reaction. The process of the combustion reaction proceeds in different manners in respective layers, i.e., a combustion zone (lowermost layer) W1, a gasification zone (intermediate layer) W2 and a carbonization zone (uppermost layer) W3. The pyrolysis gas generated from an upper surface of the waste W is conducted through the pyrolysis gas delivery port 15 to the pyrolysis gas delivery passage PG, and the gas enters into the reforming area 51 through the pyrolysis gas inlet 55.

Before the pyrolyzer 1 starts the initial combustion step, the mixed gas of air and steam at a relatively high temperature has been introduced into the reforming area 51 through the mixed gas supply passage MG, so that the reforming area 51 and the barrier 60 have been preheated to raise the temperature and accumulate the heat.

The pyrolysis gas of the pyrolyzer 1 initially mixes with the mixed gas in the reforming area 51 and then, mixes effectively therewith while passing through the gaps 65. The hydrocarbon contained in the pyrolysis gas reacts with the steam and air under the condition of high temperature atmosphere, whereby the pyrolysis gas is reformed into crude fuel gas containing a relatively large amount of carbon monoxide and hydrogen with the steam reforming reaction of the hydrocarbon.

The pyrolysis gas has a temperature of approximately 200~300°C, and the mixed gas has a temperature equal to or higher than 300°C, preferably, a temperature equal to or higher than 400°C. The air in the mixed gas reacts with the hydrocarbon in the pyrolysis gas so as to supplement the heat required for reforming reaction between the steam in the mixed gas and the hydrocarbon in the pyrolysis gas. Inclusion of excessive quantity of air in the mixed gas results in greater loss of useful fuel components (carbon monoxide and hydrogen) in the reformed gas. Therefore, the quantity of air in the mixed gas is preferably limited to a minimum quantity necessary for supplementing the heat required for the steam reforming reaction. For instance, the mixing ratio of air and steam (weight ratio) is set to be a predetermined ratio in a range from 2:8 to 7:3, e. g., 5:5.

The crude fuel gas produced by the reforming reaction flows through the gaps 65 of the spherical ceramics of the barrier 60 down to the horizontal flow passage 71 and exits to the reformed gas effluent passage HG through the vertical flow passage 72.

As the combustion reaction proceeds in the pyrolyzer, the volume of the waste W is reduced and combustion residue deposits on the bed 30. The lowermost zone of the waste W is supplied with the combustion air through the gaps 35 of the spherical ceramics and keeps its atmosphere of a high temperature by the heat accumulation effect of the spherical ceramics 30, so that the oxidizing combustion reaction of the waste is promoted. Molten waste plastics and the like in the waste W are subjected to re-combustion in the gaps 35. Therefore, incinerated ash after perfect or complete combustion lies on the bed 30, and after combustion operation of the pyrolyzer 1 is stopped, incinerated ash remaining on the bed 30 can be relatively easily discharged.

Although the present invention has been described as to specific embodiments, the present invention is not limited to such embodiments, but may be modified or changed without departing from the scope of the invention as defined in the attached claims.

For instance, although the spherical ceramic forms are employed in the aforementioned embodiment, spherical metal forms may be used as the spherical heat-resistant materials.

Further, any type of heat exchanger or heater may be employed as the heat exchanger and the air/steam heating device as set forth above, such as a high performance heat exchanger of a recuperator, metal coil or metal fin type; a high temperature air generator or a high temperature steam generator with use of regenerators of honeycomb structure as disclosed in Japanese patent application No. 10-189 (Japanese patent laid-open publication No. 10-246428), Japanese patent application No. 8-230682 (Japanese patent laid-open publication No. 10-73236) and so forth; or a regenerative type of heat exchanger having a number of pellets, pebbles or ball type regenerators contained therein.

Furthermore, although waste is used as the solid fuel in the aforementioned embodiment, the gasification apparatus of the present invention can constitute a biomass fuel gasification apparatus or a coal gasification apparatus with use of biomass fuel or coal as the solid fuel.

Industrial Applicability

As described above, in accordance with the invention defined in claim 1, a relatively small scale apparatus for gasifying solid fuel can be provided, in which the pyrolysis gas produced in the pyrolyzer for solid fuel is successfully reformed to the crude fuel gas.

According to the invention defined in claim 5, a pyrolyzer for solid fuel constituting such an apparatus for gasifying solid fuel can be provided, which can effectively incinerate the waste including a relatively large amount of waste plastics and the like, and which can produce the pyrolysis gas from the waste.

According to the invention defined in claim 7, a steam reformer constituting the aforesaid apparatus for gasifying solid fuel can be provided, which can effectively reform the pyrolysis gas to the crude fuel gas by mixing the pyrolysis gas of the gasifier with the steam.

## Claims

1. An apparatus for gasifying solid fuel which thermally decomposes the solid fuel by a combustion reaction of a low oxygen density so as to produce pyrolysis gas, comprising a solid fuel pyrolyzer and a steam reformer;

   wherein said pyrolyzer has an air inlet positioned at a bottom part thereof to blow combustion air into the pyrolyzer, a bed of the pyrolyzer located above the air inlet, and a pyrolysis gas exit positioned at an upper part of a body of the pyrolyzer and conducting the pyrolysis gas out of the pyrolyzer, the bed being constituted by a layered stack of many spherical heat-resistant materials which form a number of narrow gaps for draft of the combustion air over the whole bed; and

   wherein said steam reformer has a reforming area for producing crude fuel gas by a steam reforming reaction of said pyrolysis gas, a pyrolysis gas inlet which is in communication with said pyrolysis gas exit and which introduces the pyrolysis gas into the reforming area, a mixed gas inlet for introducing mixed gas of steam and air into the reforming area, a reformed gas effluent passage for conducting reformed gas of the reforming area out of the reformer, and a permeable heat-barrier positioned between the reforming area and the reformed gas effluent passage, the barrier being constituted by a layered stack of many spherical heat-resistant materials which form a number of narrow gaps for draft of said pyrolysis gas and said mixed gas.

2. An apparatus for gasifying solid fuel as defined in claim 1, wherein a temperature of said combustion air is set to be a temperature equal to or higher than 150°C.

3. An apparatus for gasifying solid fuel as in claim 1 or 2, wherein a temperature of said mixed gas is set to be a temperature equal to or higher than 300°C.

4. An apparatus for gasifying fixed fuel as defined in one of claims 1 to 3, wherein said reformed gas effluent passage is connected with a heat exchanger for heating the combustion air, so that the reformed gas exchanges heat with the combustion air so as to be cooled down.

5. A pyrolyzer of an apparatus for gasifying solid fuel which thermally decomposes the solid fuel by a combustion reaction of a low oxygen density so as to produce pyrolysis gas, comprising:

   an air inlet positioned at a bottom part of the pyrolyzer and upwardly blowing combustion air into the pyrolyzer; a bed of the pyrolyzer located above the air inlet; and a pyrolysis gas exit positioned at an upper part of a body of the pyrolyzer and conducting the pyrolysis gas out of the pyrolyzer, the bed being constituted by a layered stack of many spherical heat-resistant materials, which form a number of narrow gaps for draft of the combustion air over the whole bed.

6. A pyrolyzer for solid fuel as defined in claim 5, wherein said heat-resistant material is a solid and spherical ceramic form or metallic form having a diameter ranging from 5mm to 200mm.

7. A steam reformer of an apparatus for gasifying solid fuel which reforms pyrolysis gas produced by a thermal-decomposition reaction of the solid fuel, comprising:

   a reforming area which produces crude fuel gas by a steam reforming reaction of said pyrolysis gas; a pyrolysis gas inlet which introduces the pyrolysis gas of the solid fuel pyrolyzer into the reforming area; a mixed gas inlet for introducing mixed gas of steam and air into the reforming area; a reformed gas effluent passage for conducting reformed gas of the reforming area out of the reformer; and a permeable heat-barrier positioned between the reforming area and the reformed gas effluent passage, the barrier being constituted by a layered stack of many spherical heat-resistant materials, which form a number of narrow gaps for draft of said pyrolysis gas and said mixed gas.

8. A pyrolyzer for solid fuel as defined in claim 7, wherein said heat-resistant material is a solid and spherical ceramic form or metallic form having a diameter ranging from 5mm to 200mm.

9. A steam reformer as defined in claim 7 or 8, composed of a vertical reformer vessel part (50) defining said reforming area and a reformed gas flowing part (70) for conducting said reformed gas to the reformed gas effluent passage, said mixed gas inlet (54) being formed at an upper portion of said vessel part and a downstream end of the mixed gas supply passage being connected to the mixed gas inlet.

10. A steam reformer as defined in claim 9, wherein a support structure (61) supporting said spherical heat-resistant materials (62) is secured to a wall (52) of said vessel part, and a horizontal flow passage (71) of said reformed gas flowing part extends under said support structure, the horizontal flow passage continuing to a vertical flow passage (72) of the flowing part which is in communication with said reformed gas effluent passage.

**Amended claims under Art. 19.1 PCT**

**1.** (amended) An apparatus for gasifying solid fuel which thermally decomposes the solid fuel by a combustion reaction of a low oxygen density so as to produce pyrolysis gas, comprising a solid fuel pyrolyzer which thermally decomposes the solid fuel, and a steam reformer which reforms the pyrolysis gas of the pyrolyzer to crude fuel gas, said pyrolyzer being connected to said reformer by means of a pyrolysis gas delivery passage;

wherein said pyrolyzer has an air inlet positioned at a bottom part thereof, a bed of the pyrolyzer located above the air inlet, and a pyrolysis gas exit positioned at an upper part of a body of the pyrolyzer and conducting the pyrolysis gas out of the pyrolyzer, the bed being constituted by a layered stack of many spherical heat-resistant materials, which form a number of narrow gaps for draft of the combustion air over the whole bed, and the bed upwardly blowing the combustion air into the pyrolyzer; and

wherein said steam reformer has a reforming area for steam reforming of said pyrolysis gas to produce the crude fuel gas, a pyrolysis gas inlet which is in communication with said pyrolysis gas exit by means of the pyrolysis gas delivery passage and which introduces the pyrolysis gas into the reforming area, a mixed gas inlet for introducing mixed gas of steam and air into the reforming area, a reformed gas effluent passage for conducting reformed gas of the reforming area out of the reformer, and a permeable heat-barrier which is positioned between the reforming area and the reformed gas effluent passage and which defines said reforming area, the barrier being constituted by a layered stack of many spherical heat-resistant materials which form a number of narrow gaps for draft of said pyrolysis gas and said mixed gas,

said pyrolysis gas produced in the pyrolyzer being introduced into said reforming area to mix with said mixed gas of steam and air in the reforming area, and dispersing to respective narrow fluid passages of the barrier to pass therethrough, thereby being subjected to steam reforming by the mixed gas.

**2.** An apparatus for gasifying solid fuel as defined in claim 1, wherein the temperature of said combustion air is set to be a temperature equal to or higher than 150°C.

**3.** (amended) An apparatus for gasifying solid fuel as defined in claim 1 or 2, wherein the temperature of said mixed gas is set to be a temperature equal to or higher than 300°C.

**4.** (amended) An apparatus for gasifying solid fuel as defined in one of claims 1 to 3, wherein said reformed gas effluent passage is connected with a heat exchanger for heating the combustion air, so that the reformed gas exchanges heat with the combustion air so as to be cooled down.

**5.** (amended) A pyrolyzer of an apparatus for gasifying solid fuel which thermally decomposes the solid fuel by a combustion reaction of a low oxygen density so as to produce pyrolysis gas, comprising:

an air inlet positioned at a furnace bottom part of the pyrolyzer; a bed of the pyrolyzer located above the air inlet; and a pyrolysis gas exit positioned at an upper part of a body of the pyrolyzer and conducting the pyrolysis gas out of the pyrolyzer, the bed being constituted by a layered stack of many spherical heat-resistant materials which form a number of narrow gaps for draft of the combustion air over the whole bed, and the bed upwardly blowing the combustion air into the pyrolyzer,

wherein the combustion air of said air inlet blows upwardly through the gaps of the layered stack of said spherical heat-resistant materials into the pyrolyzer, a lowermost zone of the solid fuel lying on the bed is subjected to perfect combustion by combustion reaction of a high air ratio, an intermediate zone thereof is subjected to gasification, an upper zone ratio, an intermediate zone thereof is subjected to gasification, an upper zone thereof is subjected to carbonization by reduction combustion of a low air ratio, and the pyrolysis gas generated from an upper surface of the solid fuel is introduced into a reforming area of a reformer for reforming the pyrolysis gas and mixed with air and steam.

**6.** (amended) A pyrolyzer of an apparatus for gasifying solid fuel as defined in claim 5, wherein said heat-resistant material is a solid and spherical ceramic form or metallic form having a diameter ranging from 5mm to 200mm.

**7.** (amended) A steam reformer of an apparatus for gasifying solid fuel which reforms pyrolysis gas of a pyrolyzer for the solid fuel, the pyrolysis gas being produced by a thermal-decomposition reaction of the solid fuel, comprising:

a reformer vessel part (50) providing a reforming area for producing crude fuel gas by steam reforming of the pyrolysis gas; and a reformed gas flowing part (70) for conducting reformed gas to a reformed gas effluent passage,

said reformer vessel part having a pyrolysis gas inlet which introduces the pyrolysis gas of the pyrolyzer into said reforming area, and a mixed gas inlet for introducing mixed gas of steam and air into the reforming area, said reformed gas flowing part being provided with the reformed gas effluent passage for conducting the reformed gas of the reforming area out of the reformer,

wherein a permeable heat-barrier (60) is provided, which defines the reforming area and which permeably separates the reforming area and the reformed gas effluent passage, the barrier being constituted by a layered stack of many spherical heat-resistant materials, which form a number of narrow gaps for draft of said pyrolysis gas and said mixed gas, and said pyrolysis gas of the pyrolyzer is introduced into said reforming area to mix with the mixed gas of air and steam and disperses to respective narrow fluid passages of said barrier to pass therethrough, thereby being subjected to steam reforming; and

wherein said barrier functions as a heat-insulating barrier for thermally insulating the reforming area and functions as cleanup means for cleaning-up the reformed gas by trapping soot and tar components in the pyrolysis gas.

**8.** (amended) A steam reformer of an apparatus for gasifying solid fuel as defined in claim 7, wherein said heat-resistant material is a solid and spherical ceramic form or metallic form having a diameter ranging from 5mm to 200mm.

**9.** (amended) A steam reformer of an apparatus for gasifying solid fuel as defined in claim 7 or 8, wherein said mixed gas inlet (54) is formed at an upper portion of said vessel part and a downstream end of the mixed gas supply passage is connected to the mixed gas inlet.

**10.** (amended) A steam reformer of an apparatus for gasifying solid fuel as defined in claim 9, wherein a support structure (61) supporting said spherical heat-resistant materials (62) is secured to a wall (52) of said vessel part, and a horizontal flow passage (71) of said reformed gas flowing part extends under said support structure, the horizontal flow passage continuing to a vertical flow passage (72) of the reformed gas flowing part which is in communication with said reformed gas effluent passage.

FIG.1

# FIG.2

# FIG.3

20 THERMAL DECOMPOSITION AREA

W

35

30

32

18

17

31

HEATED AIR

# FIG.4

## 51 REFORMING AREA

65

62

60

71

61

REFORMED GAS

<div style="text-align:center">**INTERNATIONAL SEARCH REPORT**</div>

International application No.

PCT/JP02/00307

A. CLASSIFICATION OF SUBJECT MATTER
Int.Cl⁷  C10J 3/00, B09B 3/00

According to International Patent Classification (IPC) or to both national classification and IPC

B. FIELDS SEARCHED

Minimum documentation searched (classification system followed by classification symbols)
Int.Cl⁷  C10J 3/00, C10B 49/10, C01B 3/00, F23G 5/00, B09B 3/00

Documentation searched other than minimum documentation to the extent that such documents are included in the fields searched
Jitsuyo Shinan Koho        1922-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-290666 A (Kunio YOSHIKAWA), 17 October, 2000 (17.10.2000), Par. Nos. [0029], [0051], [0056]    (Family: none) | 1-10 |
| X | JP 10-106606 A (Sanyo Electric Co., Ltd.), 24 April, 1998 (24.04.1998), Par. Nos. [0023], [0026], [0027]    (Family: none) | 7-10 |
| Y | JP 2000-282062 A (Japan Science and Technology Corp.), 10 October, 2000 (10.10.2000), Par. No. [0016]    (Family: none) | 1-10 |
| Y | JP 11-209764 A (Ishikawajima-Harima Heavy Industries Co., Ltd.), 03 August, 1999 (03.08.1999), Par. No. [0019]    (Family: none) | 1-10 |
| Y | JP 2000-314515 A (Kobe Steel, Ltd.), 14 November, 2000 (14.11.2000), Par. No. [0018]    (Family: none) | 1-10 |

☒  Further documents are listed in the continuation of Box C.    ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 February, 2002 (07.02.02) | 19 February, 2002 (19.02.02) |

| Name and mailing address of the ISA/ Japanese Patent Office | Authorized officer |
|---|---|
| Facsimile No. | Telephone No. |

Form PCT/ISA/210 (second sheet) (July 1992)

## INTERNATIONAL SEARCH REPORT

International application No.

PCT/JP02/00307

C (Continuation). DOCUMENTS CONSIDERED TO BE RELEVANT

| Category* | Citation of document, with indication, where appropriate, of the relevant passages | Relevant to claim No. |
|---|---|---|
| Y | JP 60-139790 A (JGC Corporation),<br>24 July, 1985 (24.07.1985),<br>Claim 3 (Family: none) | 1-10 |

Form PCT/ISA/210 (continuation of second sheet) (July 1992)